# EUROPÄISCHE PATENTSCHRIFT

(11) **EP 2 876 277 B1**
(45) Veröffentlichungstag und Bekanntmachung des Hinweises auf die Patenterteilung: **08.11.2017**
(21) Anmeldenummer: 14185074.3
(22) Anmeldetag: 17.09.2014
(51) Int. Cl.: F02B 37/04, F02B 39/10, F02M 35/10, F02B 33/40

(54) **Brenngasversorgungssystem für eine Verbrennungskraftmaschine**
Combustion gas supply system for an internal combustion engine
Système d'alimentation de gaz de combustion pour un moteur à combustion interne

(30) Priorität: 26.11.2013 DE 102013113060
(43) Veröffentlichungstag der Anmeldung: 27.05.2015
(73) Patentinhaber: Pierburg GmbH, 41460 Neuss (DE); Volkswagen Aktiengesellschaft, 38436 Wolfsburg (DE)
(72) Erfinder: Nowak, Martin, 51379 Leverkusen (DE); Muhl, Ralf, 12207 Berlin (DE); Rothgang, Stefan, 47495 Rheinberg (DE); Burger, Andreas, 47803 Krefeld (DE); Cornelius, Volker, 38162 Cremlingen (DE)
(74) Vertreter: Patentanwälte ter Smitten Eberlein-Van Hoof Rütten Partnerschaftsgesellschaft mbB

(56) Entgegenhaltungen:
- WO-A1-02/10580
- WO-A1-2004/031556
- WO-A1-2011/154400
- DE-A1- 10 215 779
- DE-A1-102012 009 288
- US-A1- 2004 200 215
- US-A1- 2012 313 025

## Beschreibung

Die Erfindung betrifft ein Brenngasversorgungssystem für eine Verbrennungskraftmaschine mit einem elektrischen Verdichter mit einem Strömungsgehäuse, in dem ein Verdichterrad angeordnet ist, einer Drosselklappe, einem Ansaugkanalabschnitt, in dem die Drosselklappe angeordnet ist und einem Bypasskanal, in dem der Verdichter mit seinem Strömungsgehäuse angeordnet ist, und über den der Ansaugkanalabschnitt umgehbar ist.

Derartige Brenngasversorgungssysteme mit elektrischen Verdichtern werden in modernen Verbrennungsmotoren eingesetzt, um beispielsweise bei plötzlicher Laststeigerungsanforderung kurzfristig aktiv einen ausreichenden Ladedruck zur Verfügung stellen zu können. Insbesondere bei Motoren mit kleinem Hubraum und hoher Leistung ermöglichen diese elektrischen Verdichter im leerlaufnahen Bereich entweder eine zusätzliche Nachverdichtung zum Abgasturbolader oder eine Vorverdichtung für diesen, wodurch dem so genannten Turboloch entgegen gewirkt werden kann. Auch ist der Einsatz als einzelnes Aufladeaggregat im Verbrennungsmotor möglich.

Die elektrischen Verdichter befinden sich üblicherweise in einem Bypasskanal, der parallel zum Ansaugkanal, in dem eine Regelklappe angeordnet ist, geschaltet ist, so dass wahlweise der Verdichter oder die Regelklappe vom Ansaugluftstrom umgangen werden können. Neben dieser Funktion als Absperrklappe, um sicherzustellen, dass die Ansaugluft vollständig über den elektrischen Verdichter gefördert wird, kann die Regelklappe auch zur Regelung des Luftstroms bei abgeschaltetem elektrischen Verdichter dienen.

So wird in der DE 199 05 112 A1 ein Verfahren zum Betreiben eines Verbrennungsmotors mit Vorverdichtung offenbart, bei dem die im Turbolader verdichtete Luft in einer nachgeschalteten Verdichtungsstufe nachverdichtet wird. Diese Nachverdichtungsstufe besteht aus einem Verdichter, der entweder über die Kurbelwelle oder einen Elektromotor angetrieben wird. Der Verdichter ist in einem Bypasskanal parallel zu einer in der Ansaugleitung angeordneten Schaltklappe angeordnet, die entweder den Bypasskanal oder den Ansaugkanal freigibt.

Des Weiteren ist aus der EP 1 355 052 A1 ein Ladesystem bekannt, bei dem im Vergleich zur vorzitierten Anmeldung zwischen der Parallelschaltung von elektrischem Verdichter und der parallel geschalteten Klappe sowie dem Kompressor des Abgasturboladers ein Ladeluftkühler angeordnet ist. Die Klappe ist als Regelklappe ausgeführt, so dass auch bei abgeschaltetem elektrischem Verdichter Luft über diesen geleitet werden kann, um dessen schnelleres Anlaufen zu ermöglichen.

Zusätzlich ist aus der WO2004/031556 A1 ein vor dem Turbolader angeordneter elektrischer Verdichter bekannt, in dessen einstückig mit dem Verdichtergehäuse hergestellten Bypasskanal eine Bypassklappe angeordnet ist, welche als Rückschlagklappe ausgeführt ist. Eine Regelung des Luftstroms bei nicht angetriebenem elektrischen Verdichter ist somit nicht möglich.

Diese Ausführungen haben den Nachteil, dass ein hoher Montage- und Herstellaufwand beim Zusammenbau des Aufladesystems aufgrund einer Vielzahl unabhängiger Rohrleitungen besteht. Auch entstehen hohe Druckverluste durch die starken Winkel In den Verrohrungen stromabwärts und stromaufwärts des Verdichters.

Es stellt sich daher die Aufgabe, ein Brenngasversorgungssystem bereit zu stellen, mit dem der Montageaufwand im Vergleich zu bekannten Ausführungen reduziert werden kann. Gleichzeitig soll eine strömungsoptimierte Lage der Bauteile und Rohre zueinander sichergestellt werden und der Wirkungsgrad des Verdichters durch Vermeidung von Druckverluste verbessert werden.

Diese Aufgabe wird durch ein Brenngasversorgungssystem mit den Merkmalen des Hauptanspruchs gelöst.

Dadurch, dass das Strömungsgehäuse des Verdichters einstückig mit dem Ansaugkanalabschnitt ausgeführt ist und der Bypasskanal unmittelbar stromabwärts der geschlossenen Drosselklappe in den Ansaugkanalabschnitt mündet, wobei die Drosselklappe derart zu einer Mündung des Bypasskanalabschnitts in den Ansaugkanalabschnitt angeordnet ist, dass die Drosselklappe im geschlossenen Zustand in Verlängerung eines die Strömung begrenzenden radial äußeren Wandabschnitts des Bypasskanalabschnitts angeordnet ist, wird die Lage des Verdichters zum Ansaugkanalabschnitt sowohl bezüglich der Winkellage als auch bezüglich der Abstände festgelegt, so dass geringe Strömungswiderstände sowie ein geringer Bauraumaufwand realisierbar sind. Eine zusätzliche Befestigung des Ansaugkanalabschnitts oder des Verdichters am Motor ist nicht erforderlich. Zusätzlich sinkt der Herstellaufwand, da lediglich ein Teil gefertigt werden muss. Wirbelbildungen im Zwischenraum zwischen Mündung und Drosselklappe können vermieden werden. Des Weiteren kann bei geschlossener Drosselklappe eine Rezirkulation der Luft verhindert werden. Die Drosselklappe dient somit als Verlängerung der rückwärtigen Wand des Bypasskanals, wodurch eine Wirbelbildung vermieden und somit der Strömungswiderstand verringert wird.

In einer besonders bevorzugten Ausführungsform der Erfindung ist der in den Ansaugkanalabschnitt mündende Abschnitt des Bypasskanals stromabwärts des Verdichters einstückig mit dem Ansaugkanalabschnitt ausgebildet. Somit entfällt jegliche Montage im Zwischenraum zwischen dem Auslass des Verdichters und dem Ansaugkanalabschnitt. Die Kanäle weisen einen geringen Strömungswiderstand auf, da glatte Übergänge an den sonstigen Schnittstellen sichergestellt werden. Auch sinkt der Herstellungsaufwand und der Montageaufwand, da keine zusätzlichen Rohrleitungen installiert werden müssen.

Vorzugsweise ist die Drosselklappe über einen elektromotorischen Aktor mit einem Aktorgehäuse betätigbar, woraus eine genaue Einstellbarkeit der Drosselklappe resultiert.

Dabei ist vorteilhafterweise das Aktorgehäuse auf dem einstückigen Strömungsgehäuse des Verdichters und des Ansaugkanalabschnitts befestigt, so dass dieses vormontiert als Baugruppe angebaut werden kann.

In einer hierzu alternativen Ausführung ist das Aktorgehäuse einstückig mit dem Ansaugkanalabschnitt und dem Strömungsgehäuse ausgebildet, welches durch einen Deckel verschlossen ist. Hierdurch entfallen wiederum zu montierende Bauteile. Das Getriebe und der Elektromotor können direkt in dieses Aktorgehäuse eingesetzt werden. Ein Lösen des Aktors ist somit auch ausgeschlossen.

In einer weiteren bevorzugten Ausbildung sind der Elektromotor des Verdichters und der Aktor der Drosselklappe auf einer gemeinsamen Seite des Gehäuses, bestehend aus Strömungsgehäuse und Ansaugkanalabschnitt, angeordnet. Entsprechend liegen die elektrischen Anschlüsse der beiden Aggregate auf einer Seite, so dass die Verdrahtung im Verbrennungsmotor erleichtert und die Zugänglichkeit verbessert wird.

Vorzugsweise ist das Gehäuse des Elektromotors des Verdichters am Strömungsgehäuse über eine Flanschverbindung befestigt, so dass das Laufrad in das Strömungsgehäuse greift. Somit ist lediglich ein Anbau nicht gasführender Teile erforderlich.

In einer weiteren vorteilhaften Ausgestaltung der Erfindung mündet der einstückig mit dem Ansaugkanalabschnitt hergestellte Bypasskanalabschnitt schräg zur Mittelachse des Ansaugkanalabschnitts in den Ansaugkanalabschnitt. Diese schräge Einleitung vermindert den Strömungswiderstand und verbessert somit auch den Wirkungsgrad des Verdichters. Des Weiteren wird bei geöffneter Drosselklappe ein Einströmen in Richtung des Verdichters im Vergleich zur senkrechten Lage der Kanäle zueinander vermindert.

Die Drosselklappe ist vorteilhafterweise im geschlossenen Zustand schräg im Ansaugkanalabschnitt angeordnet. Durch diese schräge Anordnung im Kanal kann ein sehr dichter Verschluss hergestellt werden, da eine definierte Wandberührung stattfindet.

Besonders vorteilhaft ist es, wenn die Schrägstellung der Drosselklappe zur Mittelachse des Ansaugkanalabschnitts im Wesentlichen der Schrägstellung des Bypasskanals zur Mittelachse des Ansaugkanalabschnitts entspricht, wobei die zum Bypasskanal weisende Drosselklappenhälfte bezüglich der Strömungsrichtung im Ansaugkanalabschnitt stromaufwärtig zur von der Mündung des Bypasskanalabschnitts weg weisenden Drosselklappenhälfte angeordnet ist. Somit bleibt die Strömungsrichtung der verdichteten Luft beim Ausströmen aus dem Bypasskanal in den Ansaugkanalabschnitt weitestgehend erhalten.

Vorzugsweise sind in einem Verdichtergehäuse, welches aus dem Gehäuse des Elektromotors des Verdichters und dem Strömungsgehäuse des Verdichters besteht, Kühlmittelkanäle ausgebildet, so dass der elektrische Verdichter zuverlässig vor Überhitzung geschützt werden kann und eine unerwünschte Erwärmung der Luft im elektrischen Verdichter verhindert wird.

Um den Elektromotor zur Betätigung der Drosselklappe vor Überhitzung zu schützen, sind auch im Aktorgehäuse Kühlmittelkanäle ausgebildet.

In einer besonders bevorzugten Ausgestaltung des Brenngasversorgungssystems weist dieses einen Ladeluftkühler auf, dessen Kühlmittelleitungen mit den Kühlmittelkanälen im Aktorgehäuse und im Verdichtergehäuse verbunden sind. Entsprechend ist kein zusätzlicher Kühlkreislauf zur Kühlung des Verdichters und des Drosselklappenaktors notwendig.

Es wird somit ein Brenngasversorgungssystem geschaffen, welches einfach zu montieren ist und bei dem die Positionierung der Bauteile zueinander festgelegt ist. Der Wirkungsgrad des Verdichters wird durch die Vermeidung von Druckverlusten begründenden Strömungshindernissen hinter dem Auslass des Verdichters erhöht. Eine thermische Überlastung der elektrischen Bauteile wird zuverlässig vermieden.

Ein Ausführungsbeispiel eines erfindungsgemäßen Brenngasversorgungssystems ist in den Figuren dargestellt und wird nachfolgend beschrieben.
Figur 1 zeigt eine schematische Darstellung einer Verschaltung eines Brenngasversorgungssystems für einen Verbrennungsmotor mit elektrischem Verdichter.
Figur 2 zeigt eine Draufsicht auf ein erfindungsgemäßes Brenngasversorgungssystem in perspektivischer Darstellung.

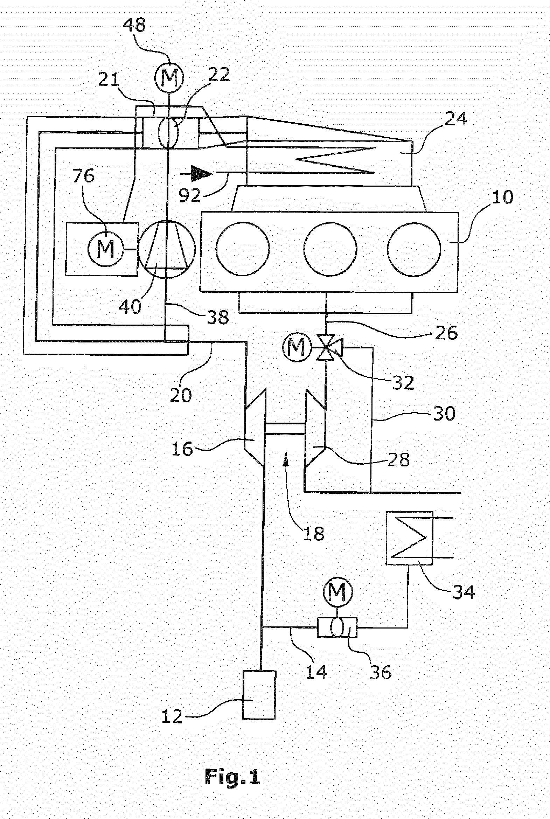

Der in Figur 1 dargestellte Verbrennungsmotor 10 wird über ein Brenngasversorgungssystem mit einer regulierten Menge eines Gemisches aus Abgas und Luft versorgt. Über einen Luftfilter 12 wird hierzu Verbrennungsluft angesaugt, die mit einem vom Verbrennungsmotor 10 zurückgeführten Abgasstrom aus einem Niederdruckabgasrückführkanal 14 gemischt wird. Dieses Brenngas gelangt über den Verdichter 16 eines Turboladers 18 in eine Ansaugleitung 20, in deren Ansaugkanalabschnitt 21 eine Drosselklappe 22 angeordnet ist, über die das Brenngas geregelt über einen Ladeluftkühler 24 dem Verbrennungsmotor 10 zugeführt wird. Das Abgas aus dem Verbrennungsmotor 10 gelangt anschließend über eine Abgasleitung 26 zu einer Turbine 28 des Turboladers 18, die über eine Umgehungsleitung 30, in der ein Waste-Gate-Ventil 32 angeordnet ist, umgangen werden kann. Hinter der Turbine 28 strömt das Abgas entweder über nicht dargestellte Komponenten zur Abgasreinigung in die Atmosphäre oder in den Niederdruckabgasrückführkanal 14, in dem ein Abgaskühler 34 und ein Abgasrückführventil 36 angeordnet sind.

Von der Ansaugleitung 20 zweigt stromaufwärts des Ansaugkanalabschnitts 21 ein Bypasskanal 38 ab, in dem ein elektrischer Verdichter 40 angeordnet ist. Der Bypasskanal 38 mündet stromabwärts der Drosselklappe 22 in den Ansaugkanalabschnitt 21. Entsprechend strömt das Brenngas bei geöffneter Drosselklappe 22 durch die gesamte Ansaugleitung 20, da der Strömungswiderstand des elektrischen Verdichters 40 höher ist als der des Ansaugkanalabschnitts 21 bei geöffneter Drosselklappe 22. Ohne plötzliche Laststeigerungen kann so eine Regelung des angesaugten und verdichteten Brenngases über die Drosselklappe 22 erfolgen. Tritt jedoch eine plötzliche Laststeigerung auf, die über den Verdichter 16 des Turboladers 18 aufgrund nicht ausreichenden Abgasdrucks an der Turbine 28 nicht kurzfristig aufgebracht werden kann, wird die Drosselklappe 22 geschlossen und der elektrische Verdichter 40 gestartet, so dass das nunmehr über den Bypasskanal 38 strömende Brenngas nachverdichtet wird, wodurch dem Verbrennungsmotor 10 kurzfristig ein ausreichender Ladedruck zur Verfügung gestellt werden kann.

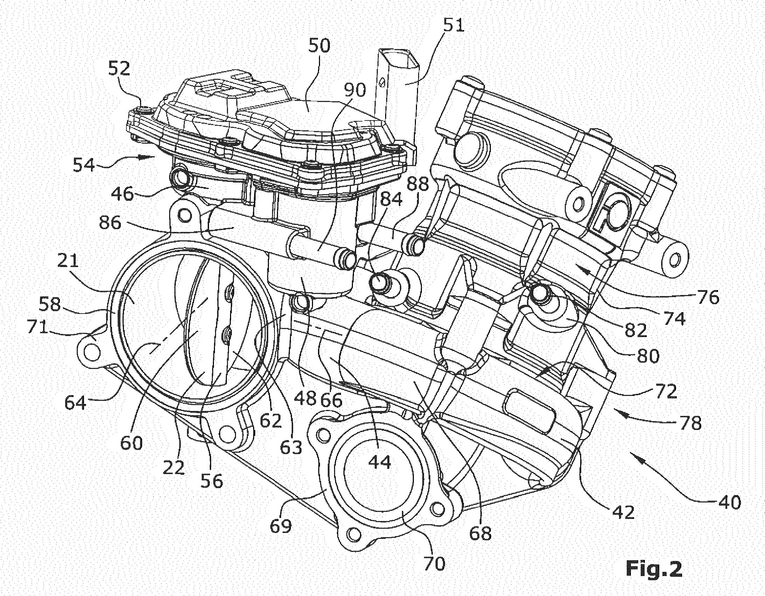

In Figur 2 ist dargestellt, wie der Bypasskanal 38 sowie Teile der Ansaugleitung 20 und des elektrischen Verdichters zur Vereinfachung der Montage erfindungsgemäß ausgeführt werden.

Hierzu ist ein Strömungsgehäuse 42 des elektrischen Verdichters 40, in dem ein nicht dargestelltes Verdichterrad angeordnet ist, einstückig mit dem Ansaugkanalabschnitt 21 ausgebildet. Im dargestellten Ausführungsbeispiel erfolgt die Verbindung über einen Bypasskanalabschnitt 44 der gleichzeitig einen tangential zum Strömungsgehäuse angeordneten Auslass des Verdichters 40 bildet und unmittelbar stromabwärts der Drosselklappe 22 in den Ansaugkanalabschnitt 21 mündet.

Zusätzlich ist ein Aktorgehäuse 46, in dem ein Elektromotor 48 angeordnet ist und welches durch einen Deckel 50 mittels Schrauben 52 verschlossen ist, einstückig mit dem Ansaugkanalabschnitt 21 ausgebildet. Am Deckel 50 ist ein Stecker 51 ausgebildet, über den der Elektromotor 48 mit Strom versorgt wird und über den die Klappenposition mittels eines Sensors übermittelt werden kann. Das Aktorgehäuse 46 bildet mit dem Elektromotor 48, dem Getriebe und dem Deckel 50 einen elektrischen Aktor 54 zum drehbaren Antrieb einer Klappenwelle 56, die das Gehäuse 58 des Ansaugkanalabschnitts 21 zentral durchdringt und auf der die Drosselklappe 22 befestigt ist.

Die Drosselklappe 22 wird durch die Klappenwelle 56 in zwei Hälften 60, 62 geteilt. Im geschlossenen Zustand liegt die erste Klappenhälfte 60 näher zur Mündung 63 und bezüglich einem Vektor in Durchströmungsrichtung des Ansaugkanalabschnitts 21 stromaufwärts zur zweiten Klappenhälfte 62. Der Winkel der Drosselklappenfläche zur Mittelachse 64 des Ansaugkanalabschnitts 21 entspricht etwa dem Winkel einer Mittelachse 66 des Bypasskanalabschnitts 44 zur Mittelachse des Ansaugkanalabschnitts 21. Die Drosselklappe 22 verlängert so einen radial äußeren Wandabschnitt 68 des Bypasskanalabschnitts 44, wobei die Strömung aus dem Bypasskanalabschnitt 44 lediglich geringfügig umgelenkt wird bei der Einströmung in den Ansaugkanalabschnitt. Da durch die Lage der Drosselklappe 22 zusätzlich für Wirbel zur Verfügung stehende stromaufwärtige Toträume unmittelbar hinter der Mündung 63 weitestgehend vermieden werden, entsteht lediglich ein sehr geringer Druckverlust, wodurch der Wirkungsgrad des Verdichters 40 steigt.

Ein Flansch 69 eines Einlassstutzens 70 des Verdichters 40 befindet sich in einer Ebene, welche lediglich geringfügig zu der Ebene der Flanschfläche 71 des Ansaugkanalabschnitts 21 geneigt ist, so dass eine Zugänglichkeit von einer Seite gegeben ist, was die Montage deutlich vereinfacht. Von hier erfolgt eine leichte Krümmung des Einlassstutzens 70, so dass das Brenngas etwa axial in den Verdichter 40 einströmen kann.

Ebenfalls lediglich geringfügig geneigt zur Befestigungsfläche des Deckels 50 des Aktors 54 ist am Strömungsgehäuse 42 an der zum Einlassstutzen 70 gegenüberliegenden Seite eine Flanschfläche 72 ausgebildet, über die ein Gehäuse 74 befestigt wird, in welchem ein das Verdichterrad antreibender Elektromotor 76 angeordnet ist, der eine nicht dargestellte Welle antreibt, auf der das Verdichterrad befestigt ist. So kann auch die Montage der beiden Elektromotoren 48, 76 und deren Gehäusen 46, 50, 78 sowie von deren elektrischen Anschlüssen von einer gemeinsamen Seite aus erfolgen.

Das Strömungsgehäuse 42 bildet gemeinsam mit dem Gehäuse 74 zur Aufnahme des Elektromotors 76 ein Verdichtergehäuse 78, in dem zusätzlich zur Wärmeabfuhr aus dem elektrischen Verdichter und somit zum Schutz des Elektromotors 76 vor Überhitzung ein Kühlmittelkanal 80 ausgebildet ist. Dieser umgibt den Elektromotor 76 an drei Seiten und wird über einen Kühlmitteleinlassstutzen 82 mit Kühlmittel versorgt, welches über einen Kühlmittelauslassstutzen 84 wieder austritt.

Eine derartige Kühlung ist auch am Aktorgehäuse 46 vorgesehen. Auch im Aktorgehäuse 46 ist ein Kühlmittelkanal 86 ausgebildet, der wiederum an drei Seiten des Elektromotors 48 verläuft und den elektrischen Aktor 54 vor thermischer Überlastung schützt. Auch hier sind am Aktorgehäuse 46 ein Kühlmitteleinlassstutzen 88 und ein Kühlmittelauslassstutzen 90 ausgebildet.

Die Kühlmittelkanäle 80, 86 sind mit einer Kühlmittelleitung 92 des Ladeluftkühlers 24 verbunden. Hierzu mündet beispielsweise die Kühlmittelleitung 92 des Ladeluftkühlers am Einlassstutzen 82 des Verdichters 40, umströmt den Elektromotor 76 und gelangt über den Auslassstutzen 84 zum Einlassstutzen 88 des Aktors 54 um von dort den Elektromotor 48 zu umströmen und am Auslassstutzen 90 wieder auszuströmen. Dieser kann mit weiteren Aggregaten des Verbrennungsmotors 10 verbunden werden.

Das erfindungsgemäße Brenngasversorgungssystem ist durch die gemeinsame Herstellung von mehreren Gehäuseteilen und Kanalabschnitten zu einem großen Teil in einem Schritt herstellbar. Die anschließende mechanische und elektrische Montage sowohl der Baueinheit selbst als auch deren Einbau im Kraftfahrzeug ist einfach über die gemeinsamen Befestigungsebenen der Bauteile und Anschlüsse durchführbar. Strömungsverluste am Verdichter werden zusätzlich vermieden. Eine komplette Vormontage der gesamten Einheit ist ebenfalls möglich.

Es sollte deutlich sein, dass der Schutzumfang des vorliegenden Hauptanspruchs nicht auf das beschriebene Ausführungsbeispiel begrenzt ist, sondern verschiedene konstruktive Änderungen möglich sind, ohne den Schutzbereich zu verlassen. Insbesondere ist es für den Fachmann ersichtlich, dass je nach Einbauort andere Befestigungs- und Montagebenen gewählt werden können. Auch eignet sich diese Ausführung für verschiedene Aktoren und Verdichtertypen.

## Patentansprüche

1. Brenngasversorgungssystem für eine Verbrennungskraftmaschine mit einem elektrischen Verdichter (40) mit einem Strömungsgehäuse (42), in dem ein Verdichterrad angeordnet ist,
einer Drosselklappe (22),
einem Ansaugkanalabschnitt (21), in dem die Drosselklappe (22) angeordnet ist,
einem Bypasskanal (38), in dem der Verdichter (40) mit seinem Strömungsgehäuse (42) angeordnet ist, und über den der Ansaugkanalabschnitt (21) umgehbar ist,
**dadurch gekennzeichnet, dass**
das Strömungsgehäuse (42) des Verdichters (40) einstückig mit dem Ansaugkanalabschnitt (21) ausgeführt ist und der Bypasskanal (38) unmittelbar stromabwärts der geschlossenen Drosselklappe (22) in den Ansaugkanalabschnitt (21) mündet, wobei die Drosselklappe (22) derart zu einer Mündung (63) eines Bypasskanalabschnitts (44) in den Ansaugkanalabschnitt (21) angeordnet ist, dass die Drosselklappe (22) im geschlossenen Zustand in Verlängerung eines die Strömung begrenzenden radial äußeren Wandabschnitts (68) des Bypasskanalabschnitts (44) derart angeordnet ist, dass
durch die Lage der Drosselklappe (22) im geschlossenen Zustand zusätzlich für Wirbel zur Verfügung stehende stromaufwärtige Toträume unmittelbar hinter der Mündung (63) weitestgehend vermieden werden.

2. Brenngasversorgungssystem für eine Verbrennungskraftmaschine nach Anspruch 1,
**dadurch gekennzeichnet, dass**
der in den Ansaugkanalabschnitt (21) mündende Bypasskanalabschnitt (44) stromabwärts des Verdichters (40) einstückig mit dem Ansaugkanalabschnitt (21) ausgebildet ist.

3. Brenngasversorgungssystem für eine Verbrennungskraftmaschine nach einem der Ansprüche 1 oder 2,
**dadurch gekennzeichnet, dass**
die Drosselklappe (22) über einen elektromotorischen Aktor (54) mit einem Aktorgehäuse (46) betätigbar ist.

4. Brenngasversorgungssystem für eine Verbrennungskraftmaschine nach Anspruch 3,
**dadurch gekennzeichnet, dass**
das Aktorgehäuse (46) auf dem einstückigen Strömungsgehäuse (42) des Verdichters (40) und des Ansaugkanalabschnitts (21) befestigt ist.

5. Brenngasversorgungssystem für eine Verbrennungskraftmaschine nach Anspruch 3,
**dadurch gekennzeichnet, dass**
das Aktorgehäuse (46) einstückig mit dem Ansaugkanalabschnitt (21) und dem Strömungsgehäuse (42) ausgebildet ist, welches durch einen Deckel (50) verschlossen ist.

6. Brenngasversorgungssystem für eine Verbrennungskraftmaschine nach einem der Ansprüche 3 bis 5,
**dadurch gekennzeichnet, dass**
ein Elektromotor (76) des Verdichters (40) und der Aktor (54) der Drosselklappe (22) auf einer gemeinsamen Seite eines Gehäuses, bestehend aus Strömungsgehäuse (42) und Ansaugkanalabschnitt (21) angeordnet sind.

7. Brenngasversorgungssystem für eine Verbrennungskraftmaschine nach Anspruch 6,
**dadurch gekennzeichnet, dass**
ein Gehäuse (74) des Elektromotors (76) des Verdichters (40) am Strömungsgehäuse (42) über eine Flanschfläche (72) befestigt ist.

8. Brenngasversorgungssystem für eine Verbrennungskraftmaschine nach Anspruch 2,
**dadurch gekennzeichnet, dass**
der einstückig mit dem Ansaugkarialabschnitt (21) hergestellte Bypasskanalabschnitt (44) schräg zur Mittelachse (64) des Ansaugkanalabschnitts (21) in den Ansaugkanalabschnitt (21) mündet.

9. Brenngasversorgungssystem für eine Verbrennungskraftmaschine nach einem der vorhergehenden Ansprüche,
**dadurch gekennzeichnet, dass**
die Drosselklappe (22) im geschlossenen Zustand schräg im Ansaugkanalabschnitt (21) angeordnet ist.

10. Brenngasversorgungssystem für eine Verbrennungskraftmaschine nach einem der Ansprüche 8 oder 9,
**dadurch gekennzeichnet, dass**
die Schrägstellung der Drosselklappe (22) zur Mittelachse (64) des Ansaugkanalabschnitts (21) im Wesentlichen der Schrägstellung der Mündung (63) des Bypasskanalabschnitts (44) zur Mittelachse (64) des Ansaugkanalabschnitts (21) entspricht, wobei die im geschlossenen Zustand zum Bypasskanalabschnitt (44) weisende Drosselklappenhälfte (60) bezüglich der Strömungsrichtung im Ansaugkanalabschnitt (21) stromaufwärtig zur von der Mündung (63) des Bypasskanalabschnitts (44) weg weisenden Drosselklappenhälfte (62) angeordnet ist.

11. Brenngasversorgungssystem für eine Verbrennungskraftmaschine nach Anspruch 7,
**dadurch gekennzeichnet, dass**
in einem Verdichtergehäuse (78), welches aus dem Gehäuse (74) des Elektromotors (76) des Verdichters (40) und dem Strömungsgehäuse (42) des Verdichters (40) besteht, ein Kühlmittelkanal (80) ausgebildet ist.

12. Brenngasversorgungssystem für eine Verbrennungskraftmaschine nach einem der Ansprüche 3 bis 7,
**dadurch gekennzeichnet, dass**
im Aktorgehäuse (46) ein zweiter Kühlmittelkanal (86) ausgebildet ist.

13. Brenngasversorgungssystem für eine Verbrennungskraftmaschine nach Anspruch 11 und 12,
**dadurch gekennzeichnet, dass**
das Brenngasversorgungssystem einen Ladeluftkühler (24) aufweist, dessen Kühlmittelleitungen mit den Kühlmittelkanälen (80, 86) im Aktorgehäuse (46) und im Verdichtergehäuse (78) verbunden sind.

## Claims

1. Combustion gas supply system for an internal combustion engine having an electric compressor (40) with a flow housing (42) in which an impeller wheel is arranged,
a throttle flap (22),
an intake duct section (21) in which the throttle flap (22) is arranged,
a bypass duct (38) in which the compressor (40) with its flow housing (42) is arranged and via which the intake duct section (21) can be bypassed,
**characterized in that**
the flow housing (42) of the compressor (40) being formed integrally with the intake duct section (21) and the bypass duct (38) opens into the intake duct section (21) immediately downstream of the closed throttle flap (22), wherein the throttle flap (22) is arranged such relative to an opening (63) of a bypass duct section (44) into the intake duct section (21) that, in the closed state, the throttle flap (22) is arranged such in projection of a radial outer wall section (68) of the bypass duct section (44) limiting the flow that, due to the position of the throttle flap (22) in the closed state, upstream dead spaces additionally available for turbulences are substantially avoided immediately behind the opening (63).

2. Combustion gas supply system for an internal combustion engine of claim 1, **characterized in that**, downstream of the compressor (40), the bypass duct section (44) opening into the intake duct section (21) is formed integrally with the intake duct section (21).

3. Combustion gas supply system for an internal combustion engine of one of claims 1 or 2, **characterized in that** the throttle valve (22) is actuable via an electrically driven actuator (54) having an actuator housing (46).

4. Combustion gas supply system for an internal combustion engine of claim 3, **characterized in that** the actuator housing (46) is fastened on the integral flow housing (42) of the compressor (40) and the intake duct section (21).

5. Combustion gas supply system for an internal combustion engine of claim 3, **characterized in that** the actuator housing (46) is formed integrally with the intake duct section (21) and the flow housing (42) which is closed by a cover (50).

6. Combustion gas supply system for an internal combustion engine of one of claims 3 to 5, **characterized in that** an electric motor (76) of the compressor (40) and the actuator (54) of the throttle flap (22) are arranged on a common side of a housing formed by the flow housing (42) and the intake duct section (21).

7. Combustion gas supply system for an internal combustion engine of claim 6, **characterized in that** a housing (74) of the electric motor (76) of the compressor (40) is fastened on the flow housing (42) by a flange surface (72).

8. Combustion gas supply system for an internal combustion engine of claim 2, **characterized in that** the bypass duct section (44) formed integrally with the intake duct section (21) opens diagonally into the intake duct section (21) with respect to the centre axis (64) of the intake duct section (21).

9. Combustion gas supply system for an internal combustion engine of one of the preceding claims, **characterized in that**, in the closed state, the throttle flap (22) is arranged obliquely in the intake duct section (21).

10. Combustion gas supply system for an internal combustion engine of one of claims 8 or 9, **characterized in that** the inclination of the throttle flap (22) with respect to the centre axis (64) of the intake duct section (21) substantially corresponds to the inclination of the opening (63) of the bypass duct section (44) with respect to the centre axis (64) of the intake duct section (21), wherein the throttle flap half (60) directed toward the bypass duct section (44) in the closed state, is arranged upstream of the throttle flap half (62) averted from the opening (63) of the bypass duct section (44) with respect to the flow direction in the intake duct section (21).

11. Combustion gas supply system for an internal combustion engine of claim 7, **characterized in that** a coolant duct (80) is formed in a compressor housing (78) formed by the housing (74) of the electric motor (76) of the compressor (40) and the flow housing (42) of the compressor (40).

12. Combustion gas supply system for an internal combustion engine of one of claims 3 to 7, **characterized in that** a second coolant duct (86) is formed in the actuator housing (46).

13. Combustion gas supply system for an internal combustion engine of claim 11 and 12, **characterized in that** the combustion gas supply system comprises an intercooler (24) whose coolant lines are connected with the coolant ducts (80, 86) in the actuator housing (46) and in the compressor housing (78).

## Revendications

1. Système d'alimentation de gaz de combustion pour un moteur à combustion interne avec un compresseur (40) électrique ayant un carter d'écoulement (42) dans lequel une roue de compresseur est disposée,
un clapet à papillon (22),
une section de conduit d'aspiration (21) dans laquelle le clapet à papillon (22) est disposé,
un conduit de dérivation (38) dans lequel ledit compresseur (40) est disposé avec son carter d'écoulement (42) et par lequel la section de conduit d'aspiration (21) est contournable,
**caractérisé en ce que**
le carter d'écoulement (42) du compresseur (40) est réalisé en une seule pièce avec la section de conduit d'aspiration (21) et le conduit de dérivation (38) s'ouvre dans la section de conduit d'aspiration (21) juste en aval du clapet à papillon (22) fermé, ledit clapet à papillon (22) étant disposé par rapport à une ouverture (63) d'une section du conduit de dérivation (44) dans la section de conduit d'aspiration (21) de sorte qu'en état fermé, ledit clapet à papillon (22) est disposé en prolongation d'une section de paroi (68) radialement extérieure de la section du conduit de dérivation (44) et limitant l'écoulement, de sorte que par la position du clapet à papillon (22), en position fermée, des espaces morts amonts, qui sont en plus disponibles pour créer des turbulences, sont essentiellement évités juste derrière l'ouverture (63).

2. Système d'alimentation de gaz de combustion pour un moteur à combustion interne selon la revendication 1, **caractérisé en ce qu'**en aval du compresseur (40), la section du conduit de dérivation (44) s'ouvrant dans la section de conduit d'aspiration (21) est formée d'un seul tenant avec la section de conduit d'aspiration (21).

3. Système d'alimentation de gaz de combustion pour un moteur à combustion interne selon l'une quelconque des revendications 1 ou 2, **caractérisé en ce que** ledit clapet à papillon (22) peut être actionné par un actionneur (54) électromoteur avec un carter d'actionneur (46).

4. Système d'alimentation de gaz de combustion pour un moteur à combustion interne selon la revendication 3, **caractérisé en ce que** ledit carter d'actionneur (46) est monté sur le carter d'écoulement (42) monobloc du compresseur (40) et de la section de conduit d'aspiration (21).

5. Système d'alimentation de gaz de combustion pour un moteur à combustion interne selon la revendication 3, **caractérisé en ce que** ledit carter d'actionneur (46) est formé d'un seul tenant avec la section de conduit d'aspiration (21) et ledit carter d'actionneur (46) qui est fermé par un couvercle (50).

6. Système d'alimentation de gaz de combustion pour un moteur à combustion interne selon l'une quelconque des revendications 3 à 5, **caractérisé en ce qu'**un moteur électrique (76) du compresseur (40) et ledit actionneur (54) dudit clapet à papillon (22) sont disposés sur un côté commun d'un carter formé par le carter d'écoulement (42) et la section de conduit d'aspiration (21).

7. Système d'alimentation de gaz de combustion pour un moteur à combustion interne selon la revendication 6, **caractérisé en ce qu'**un carter (74) dudit moteur électrique (76) du compresseur (40) est monté sur le carter d'écoulement (42) par une face de bride (72).

8. Système d'alimentation de gaz de combustion pour un moteur à combustion interne selon la revendication 2, **caractérisé en ce que** la section du conduit de dérivation (44) réalisée d'un seul tenant avec la section de conduit d'aspiration (21) s'ouvre obliquement, par rapport à l'axe central (64) de la section de conduit d'aspiration (21), dans la section de conduit d'aspiration (21).

9. Système d'alimentation de gaz de combustion pour un moteur à combustion interne selon l'une quelconque des revendications précédentes, **caractérisé en ce qu'**en position fermée, le clapet à papillon (22) est disposé obliquement dans la section de conduit d'aspiration (21).

10. Système d'alimentation de gaz de combustion pour un moteur à combustion interne selon l'une quelconque des revendications 8 ou 9, **caractérisé en ce que** l'inclinaison du clapet à papillon (22) par rapport à l'axe central (64) de la section de conduit d'aspiration (21) correspond sensiblement à l'inclinaison de l'ouverture (63) de la section du conduit de dérivation (44) par rapport à l'axe central (64) de la section de conduit d'aspiration (21), la moitié (60) du clapet à papillon qui, en position fermée, est tournée vers la section du conduit de dérivation (44), étant disposée, par rapport à la direction d'écoulement dans la section de conduit d'aspiration (21), en amont de la moitié (62) du clapet à papillon détournée de l'ouverture (63) de la section du conduit de dérivation (44).

11. Système d'alimentation de gaz de combustion pour un moteur à combustion interne selon la revendication 7, **caractérisé en ce qu'**un conduit de réfrigérant (80) est formé dans un carter de compresseur (78) formé par le carter (74) dudit moteur électrique (76) du compresseur (40) et le carter d'écoulement (42) du compresseur (40).

12. Système d'alimentation de gaz de combustion pour un moteur à combustion interne selon l'une quelconque des revendications 3 à 7, **caractérisé en ce qu'**un deuxième conduit de réfrigérant (86) est formé dans le carter d'actionneur (46).

13. Système d'alimentation de gaz de combustion pour un moteur à combustion interne selon les revendications 11 et 12, **caractérisé en ce que** le système d'alimentation de gaz de combustion comprend un refroidisseur d'air de charge (24) dont les tuyaux de réfrigérant sont reliés aux conduits de réfrigérant (80, 86) dans le carter d'actionneur (46) et dans le carter de compresseur (78).
